(19) Europäisches Patentamt
European Patent Office
Office européen des brevets

(11) **EP 2 375 181 A1**

(12) **EUROPEAN PATENT APPLICATION**

(43) Date of publication:
**12.10.2011 Bulletin 2011/41**

(51) Int Cl.:
***F24F 12/00*** *(2006.01)*    ***F24F 13/30*** *(2006.01)*
***F28D 9/00*** *(2006.01)*

(21) Application number: **11162145.4**

(22) Date of filing: **12.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.04.2010 IT TO20100276**

(71) Applicant: **Università Degli Studi Di Torino Torino (IT)**

(72) Inventor: **The designation of the inventor has not yet been filed**

(74) Representative: **Jorio, Paolo et al STUDIO TORTA Via Viotti 9 10121 Torino (IT)**

(54) **Ventilator with a counterflow heat exchanger**

(57)    A ventilator (1) comprises a plurality of metal plates (2) stacked and spaced to define counterflow heat exchange paths for air flow, in which the plates (2) comprise a plurality of segments (2') joined to one another by means of a thermically insulating material to define a discrete thermal gradient corresponding to each segment (2') along the paths.

FIG. 1

**Description**

The present invention relates to a ventilation and heat exchange device for exchanging building/room inside air with outside atmospheric air, for example in use for residential buildings or for livestock structures.

During the cold season an enclosed environment has inside air to be exchanged according to the environment cubature and the density of people or animals that are stationed therein.

One solution is to put the enclosed environment directly in communication with the atmosphere to let outside air in and inside air out. However, the enclosed environment is heated by appropriate systems and the cost of heating the outside air is high. In addition, the air sent into the atmosphere is warm and therefore thermal. energy is thus wasted.

The aim of the present invention is to provide a ventilation and heat exchange device for exchanging inside air and outside air and at the same time reducing the operating costs of the heating system.

The aim of the present invention is achieved by way of a ventilation and heat exchange device according to claim 1.

For a better understanding of the present invention a preferred embodiment is now described, purely by way of example without limitation, with reference to the accompanying drawings in which:

- Figure 1A is a plan view of a ventilator in accordance with the present invention;
- Figure 1b is a side view of Figure 1;
- Figure 1c is a plan view of the ventilator of figure 1 with parts removed for clarity,
- Figure 1d is a section along the line d-d of figure 1c;
- Figures 2a, 2b are respective views of fluidic paths in the ventilator of figure 1;
- Figure 3 is a counterflow diagram of the ventilator of figure 1;

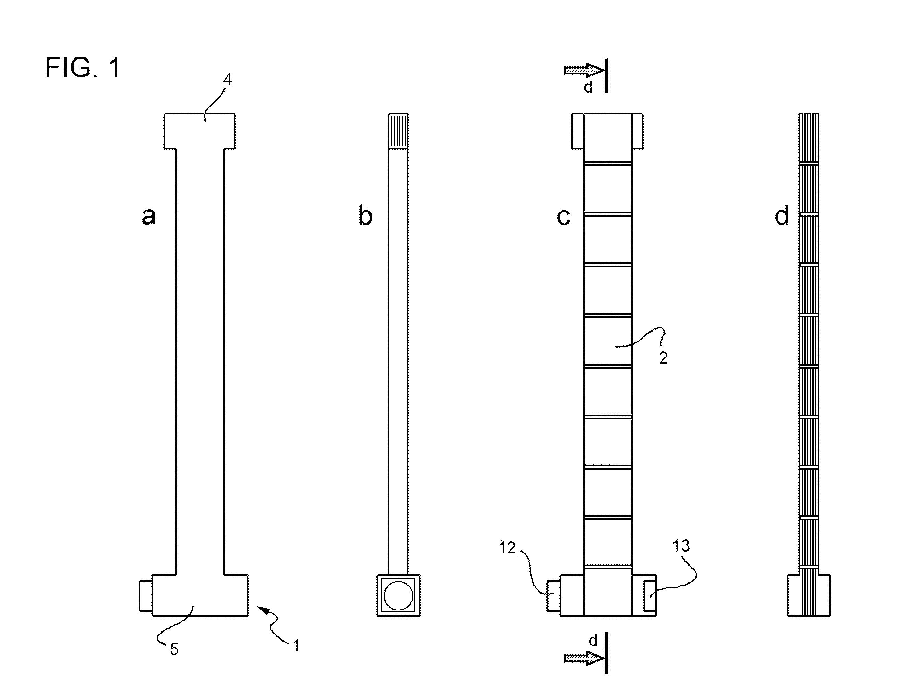

In Figure 1 a ventilator 1 is schematically shown according to the present invention. The ventilator 1 comprises a plurality of plates 2, separated one from another by respective spacers 3, an end portion 4 in use placed outside the building, i.e. at low temperature, and an end portion 5 in use placed within the building, i.e. at high temperature.

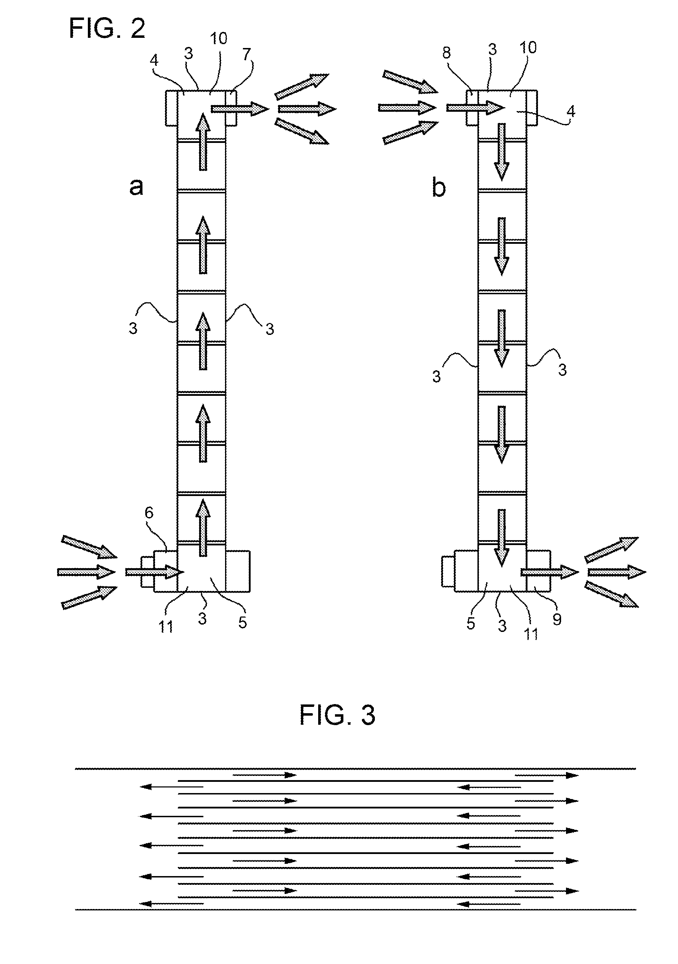

In particular, the spacers 3 are configured to define the fluidic paths of air flows in heat exchange through the ventilator 1. A path to cool the inside air is defined by an inlet port 6 defined at the end portion 5, an output port 7 defined at the end portion 4 and is illustrated in Figure 2a. Similarly (Figure 2b), a. path to heat the outside air is defined by an inlet port 8 defined at the end portion 4 and an output port 9 defined at the end portion 5. According to a preferred embodiment of the present invention, the end portion. 4 has a closed head 10 and transverse to the direction of air flow, and the inlet openings 8 are opposed to the outlet openings 7 with respect to the head 10. Similarly, the end portion 5 has a head 11 transverse to the direction of air flow, and the inlet openings 6 are opposed to the outlet openings 9 with respect to the head 11. The inlet openings 6, 8 are opposed to the respective outlet openings 7, 9 for separating the inlet air as much as possible from the outlet air and preventing air recirculation, i.e. exhaust air exiting from the portion 4 is collected by the inlet port 8.

Each path is also laterally defined by spacers 3 functioning as both a separation of the plates 2 in the direction perpendicular to the plates themselves, and a containment of the air flow.

In addition, the paths are alternately stacked for creating a flow exchange in counterflow as shown in Figure 3.

In order to increase the heat exchange efficiency, plates 2 are made up of metal segmented radiating elements 2' connected one another in the transverse direction with respect to the airflow direction by a heat-insulating material, such as adhesive tape. In this way, each radiating element defines a different temperature from the adjacent radiating elements. In particular, according to an experimental survey, it was measured that an high efficiency is achieved by average temperature difference among all the adjacent radiating elements 2' lower than 4°C, preferably about 2°C.

Furthermore, the distance between each plate 2 in perpendicular direction to the plates themselves and the distance between the spacers 3 parallel to the flow direction, bearing in mind the flow rate of the ventilators is such as to define a turbulent airflow.

In addition, through an experimental study it has been stated that the number of radiating elements 2' to maximize the efficiency of the counterflow heat exchange of ventilator 1 follows a simple formula:

```
number of elements = (design internal temperature - design
outside temperature) / 2
```

For example, the design outside temperature is the average winter season temperature of the area of the building in which the ventilator 1 is mounted, and the inside temperature is 20°C.

To simplify the control of air movement, the ventilator 1 comprises a first and a second convector 12 and 13 mounted either on the end portion 4 or on the portion 5. In this way, the air density is essentially the same (the difference in temperature is below 5°C) and so are flow rates. Furthermore a convector is configured to push the airflow within the respective path and the other convector is configured to draw an airflow out of its respective path. In the case illustrated, the convector 12 pushes air into the cooling path and the convector 13 draws air from the heating path.

An experimental study has permitted to obtain the following results with temperature measurements performed between 6:50 and 7:10 every 5 minutes:

Chart 1

Legend:

outside = outside air temperature entering the heat exchanger;
outlet = air temperature exiting the heat exchanger towards the outside;
p1 - p10 = temperature of plates from 1 (outer) to 10 (inner); inlet = air temperature exiting the heat exchanger towards the inside;
inside = temperature of the heated room;

Table 1

| PARAMETER | MEASUREMENT UNIT | VALUE |
|---|---|---|
| Hourly consumption for ventilation | Wh | 7.7 |
| Inside temperature | °C | 21.1 |
| Outside temperature | °C | 1.1 |
| Difference between inside and outside temperature | °C | 20.0 |
| Air T. entering the inside | °C | 19.5 |
| Air T. exiting to the outside | °C | 3.1 |
| Air temperature dropping when exiting | °C | 18.0 |
| Air temperature rising when entering | °C | 18.5 |
| Airflow rate | 1/s | 2.8 |
| Airflow rate | Kg/h. | 11.8 |
| Heat exchange | Kcal-h | 52.8 |
| Heat exchange | Wh | 613.4 |

(continued)

| PARAMETER | MEASUREMENT UNIT | VALUE |
|---|---|---|
| Relation between heat exchange/ventilator consumption | Wh/Wh | 79.2 |
| Recovered heat | % | 92.3 |

Table 2

| range | P2-P1 | P3-P2 | P4-P3 | P5-P4 | P6-P5 | P7-P6 | P8-P7 | P9-P8 | P10-P9 |
|---|---|---|---|---|---|---|---|---|---|
| Delta T(°C) | 0.9 | 1.6 | 1.5 | 2.2 | 3.2 | 2.4 | 1.3 | 1.5 | 1.5 |

The supply voltage of the two ventilators was increased to 9.00 V, and the current absorbed was measured, and therefore the power. The speed of the air exiting the appliance was measured and thus by comparison with the flow section the volumetric flow rate was calculated. By multiplying by the air density at an average test temperature the mass flow rate was obtained, substantially in accordance with the following formula:

$$\text{Heat exchange} = V * S * Cp * rho * \text{average } \Delta T$$

where
V = velocity of air exiting the heat exchanger;
S = section of the heat exchanger in m^2;
Cp = specific heat of air;
rho = air density in kg m^-3;
average $\Delta T$ = average between the gain in temperature of the entering air and loss of outgoing air

It can be seen from Chart 1 that the plate temperatures from outside to inside rise along a slightly sinusoidal line with maximum temperature differences in the central plates. The difference between P10 and P1 is on average around 16.1 degrees, as can be seen from the data of Table 2, while the average gradient (average of discrete gradients, i.e. average of temperature differences) between a plate and the next is at 1.79 degrees, but with considerable variations between the central appliance zone and the two outside areas.

The ventilator 1 was turned on for half an hour before the first survey. This was to allow the equipment to find a balance, since at the beginning of operations it was at a temperature of 20°C. The first data recorded still reflected the actual ventilator 1 temperature, with a prevalence in the increasing of the entering air temperature, compared to the exiting one, rightly because the air was warmed in part by the residual heat of the appliance itself. But after the first 5 surveys the situation was stabilised, a sign that the thermal inertia of the ventilator was exhausted.

After collecting data for one hour changes in surrounding conditions were made, by striking the end portion 5 with an air jet from a heater. This test was made knowing that only general indications would be obtained, as the ventilator 1 would encounter a change in the internal temperatures, an imbalance of air velocity due to the heater flow, in a direction concordant with the ventilator action, therefore an increase in the exiting flow compared to the entering one, by an amount that was not measured. Finally, the survey was executed at around 8:00am and the outside temperature was rapidly rising, so also the corresponding parameter was not in a stable situation.

Table 3

| PARAMETER | MEASUREMENT UNIT | VALUE |
|---|---|---|
| Hourly consumption for ventilation | Wh | 7.7 |
| Inside temperature | °C | 36.9 |
| Outside temperature | °C | 3.4 |
| Difference between inside and outside temperature | °C | 33.5 |
| Air T. entering the inside | °C | 28.7 |

(continued)

| PARAMETER | MEASUREMENT UNIT | VALUE |
|---|---|---|
| Air T. exiting to the outside | °C | 5.6 |
| Air temperature dropping when exiting | °C | 31.3 |
| Air temperature rising when entering | °C | 25.3 |
| Airflow rate | 1/s | 2.8 |
| Airflow rate | Kg/h | 11.8 |
| Heat exchange | Kcal-h | 81.9 |
| Heat exchange | Wh | 952.2 |
| Relation between heat exchange / ventilator consumption | Wh/Wh | 123.0 |
| Recovered heat | % | 75.5 |

Table 4

| range | P2-P1 | P3-P2 | P4-P3 | P5-P4 | P6-P5 | P7-P6 | P8-P7 | P9-P8 | P10-P9 |
|---|---|---|---|---|---|---|---|---|---|
| Delta T(°C) | 1.2 | 2.6 | 1.9 | 3.1 | 4.5 | 3.1 | 2.6 | 2.6 | 4.2 |

As can be easily read from the results, the heat exchanger fails to raise the entering air temperature with the same effectiveness as the previous test. Despite further raising of the temperature, by 25.3 °C against 19.0 of the previous test, since the entering air temperature is 36.9 °C, the delta to be covered is still 9.2 °C, which lowers the heat recovered to 75.5% (still an absolutely appreciable fact). This second test, even with the limitations mentioned above, indicates quite clearly that for thermal delta to be exchanged by more than 20 degrees the number of plates should be increased in sequence at a rate of one plate every 2 degrees of increase. Preferably but not exclusively, the ventilator 1 can be used in enclosed livestock structures (stables, piggeries, etc..) where the air can be vitiated by the presence of noxious gases (carbon dioxide, methane, sulphur dioxide, etc.). In general, these gases are produced by the animals respiration and/or the exhalation of dejections produced by animals and/or the exhaust of the machines used on farms.

**Claims**

1. A ventilator (1) comprising a plurality of metal plates (2) stacked and spaced to define counterflow heat exchange paths for air flows, **characterised in that** said plates (2) comprise a plurality of segments (2') joined to one another by means of a thermally insulating material to define a discrete thermal gradient corresponding to each segment (2') along said paths.

2. The ventilator according to claim 1, **characterised in that** said segments (2') are configured to maintain an average temperature difference between a segment and the following lower than 3 degrees.

3. The ventilator according to claim 2, **characterised in that** the number of said segments depends on the inlet temperature difference respectively of an air flow to be heated and to be cooled.

4. The ventilator according to any of the preceding claims, **characterised in that** said paths comprise a heating path and a cooling path and by comprising a first and a second convector (12, 13) respectively connected either to the inlet of the cooling path and to the outlet of the heating path or to the outlet of the cooling path and to the inlet of the heating path so that said convectors process air masses having a substantially equivalent density

5. The ventilator according to any of the preceding claims, **characterised in that** said plates (2) are spaced by spacers (3) made of wood and laterally defining said paths.

6. The ventilator according to any of the preceding claims, **characterised in that** the air flow along said paths is substantially laminar.

7. The ventilator according to any of the preceding claims, **characterised by** comprising a first and a second head portion (10, 11), each of which defines an inlet port (8, 6) and an outlet port (7, 9), said inlet and outlet ports being opposite with respect to the respective head portion.

FIG. 1

EP 2 375 181 A1

FIG. 2

FIG. 3

Europäisches
Patentamt

European
Patent Office

Office européen
des brevets

# EUROPEAN SEARCH REPORT

Application Number

EP 11 16 2145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 298 23 852 U1 (FEUSTLE GERHARD [DE]) 27 January 2000 (2000-01-27) * abstract * ----- | 1-7 | INV. F24F12/00 F24F13/30 F28D9/00 |
| A | US 2008/173433 A1 (HAGLID KLAS C [US]) 24 July 2008 (2008-07-24) * abstract * ----- | 1-7 | |
| A | EP 1 249 669 A2 (BUILDING PERFORMANCE EQUIPMENT [US]) 16 October 2002 (2002-10-16) * abstract * ----- | 1-7 | |
| A | EP 2 068 107 A1 (PANASONIC CORP [JP]) 10 June 2009 (2009-06-10) * abstract * ----- | 1-7 | |
| A | GB 2 091 407 A (TOKYO SHIBAURA ELECTRIC CO) 28 July 1982 (1982-07-28) * abstract * ----- | 1-7 | |

TECHNICAL FIELDS
SEARCHED      (IPC)

F24F
F28D

The present search report has been drawn up for all claims

| Place of search | Date of completion of the search | Examiner |
|---|---|---|
| Munich | 7 July 2011 | Valenza, Davide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 16 2145

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2011

| Patent document cited in search report | | Publication date | Patent family member(s) | | Publication date |
|---|---|---|---|---|---|
| DE 29823852 | U1 | 27-01-2000 | DE 19737158 A1 | | 04-03-1999 |
| | | | WO 9910694 A2 | | 04-03-1999 |
| | | | EP 0953136 A2 | | 03-11-1999 |
| US 2008173433 | A1 | 24-07-2008 | NONE | | |
| EP 1249669 | A2 | 16-10-2002 | CA 2380138 A1 | | 10-10-2002 |
| EP 2068107 | A1 | 10-06-2009 | CA 2664832 A1 | | 03-04-2008 |
| | | | JP 2008107071 A | | 08-05-2008 |
| | | | WO 2008038475 A1 | | 03-04-2008 |
| | | | KR 20090043005 A | | 04-05-2009 |
| | | | US 2010071887 A1 | | 25-03-2010 |
| GB 2091407 | A | 28-07-1982 | US 4475589 A | | 09-10-1984 |

EPO FORM P0459

For more details about this annex : see Official Journal of the European Patent Office, No. 12/82